# EUROPEAN PATENT SPECIFICATION

(11) **EP 4 037 819 B1**
(45) Date of publication and mention of the grant of the patent: **15.01.2025**
(21) Application number: 20830088.9
(22) Date of filing: 09.12.2020
(51) Int. Cl.: B01J 8/00, B01J 19/24

(54) **APPARATUS AND PROCESS FOR THE GAS-PHASE POLYMERIZATION**
VORRICHTUNG UND VERFAHREN ZUR GASPHASENPOLYMERISIERUNG
APPAREIL ET PROCÉDÉ POUR LA POLYMÉRISATION EN PHASE GAZEUSE

(30) Priority: 11.12.2019 EP 19215247
(43) Date of publication of application: 10.08.2022
(73) Proprietor: Basell Polyolefine GmbH, 50389 Wesseling (DE)
(72) Inventor: PENZO, Giuseppe, 46100 Mantova (IT); DORINI, Maurizio, 44122 Ferrara (IT); RINALDI, Riccardo, 44122 Ferrara (IT); SOFFRITTI, Silvia, 44100 Ferrrara (IT); MEI, Giulia, 44122 Ferrara (IT)
(74) Representative: LyondellBasell
(86) International application number: PCT/EP2020/085237
(87) International publication number: WO 2021/155977

(56) References cited:
- EP-A1- 3 321 288
- EP-A2- 0 460 735
- WO-A1-00/02929
- WO-A1-03/080253
- WO-A1-2018/115236
- WO-A1-2021/116156
- US-A1- 2004 136 881

## Description

### FIELD OF THE INVENTION

The present disclosure provides an apparatus for carrying out a catalytic gas-phase olefin polymerization having at least two interconnected polymerization zones and further provides a process for carrying out a catalytic gas-phase olefin polymerization in this apparatus.

### BACKGROUND OF THE INVENTION

Polyolefins are by far the largest class of synthetic polymers made and used today. Their success is mainly due to low costs of production, light weight and high chemical resistance. A wide range of mechanical properties is possible through the use of copolymerization, blending and additives to make products from elastomers to thermoplastics to high strength fibers. Although well-established since the 1930's, improving the production process and performance of these materials is still the subject of ongoing research.

Today, a widely-used technology for the production of polyolefins is the gas-phase polymerization, in particular fluidized-bed gas-phase processes in which the polymer is confined in a vertical cylindrical zone. Commonly, the reaction gases exiting the reactor are taken up by a compressor, cooled and sent back, together with make-up monomers and appropriate quantities of hydrogen to the bottom of the bed through a distributor. Entrainment of solid to the gas is limited by an appropriate dimensioning of the upper part of the reactor, where the gas velocity is reduced. The flow rate of the circulating gas is set to assure a velocity within an adequate range above the minimum fluidization velocity and below the "transport velocity". The heat of reaction is removed by cooling the circulating gas and the catalyst components may be continuously fed into the polymerization vessel. The composition of the polymer can be controlled by the composition of the gas-phase. However, limits of fluidized-bed processes are the difficulty of controlling the molecular weight distribution of the obtained polymers, in particular when it comes to broadening the molecular weight distribution, or to obtain copolymers having different comonomer compositions. Since the breadth of the molecular weight distribution and the comonomer distribution have an influence on both the rheological behavior of the polymer, and hence the processability of the melt, and on the final mechanical properties of the product, it would be attractive to be able to adapt the structure of the prepared polymers according to need. One major focus of research and industry has therefore been on strategies to be able to influence the composition of polyolefins.

WO 97/04015 refers to a process for the gas-phase polymerization of α-olefins CH₂=CHR, where R is hydrogen or a hydrocarbon radical having 1-12 carbon atoms, carried out in a first and in a second interconnected polymerization zone, to which one or more of said α-olefins are fed in the presence of a catalyst under reaction conditions and from which the polymer product is discharged, wherein the growing polymer particles flow through the first of said polymerization zones under fast fluidization conditions, leave said first polymerization zone and enter the second of said polymerization zones through which the polymer particles flow in a densified form under the action of gravity, leave said second polymerization zone and are at least partially reintroduced into said first polymerization zone, thus establishing a circulation of polymer between the two polymerization zones.

Based on the technology described in WO 97/04015, WO 00/02929 further suggests a process wherein means are provided which are capable of totally or partially preventing the gas mixture present in the riser, i.e. the first polymerization zone, from entering the downcomer, i.e. the second polymerization zone, and a gas and/or liquid mixture having a composition different from the gas mixture present in the riser is introduced into the downcomer in order to achieve in-reactor made blends of polymers having different compositions.

WO 2012/031986 suggests a gas-phase polymerization reactor having interconnected polymerization zones comprising a riser through which the polymer particles flow upward under fast fluidization conditions or transport conditions; and a downcomer through which the polymer particles flow downward in a densified form under the action of gravity, the bottom of said downcomer being connected to the lower region of said riser by means of a transport section, said transport section being designed as a bend descending from the downcomer to the riser; said reactor being further provided with a line for feeding a carrier gas at the inlet of said transport section and with a gas distribution grid extending from the inlet of said transport section for an angle of at least 50° along the bending of said transport section.

Although there has been a continuous development of the gas-phase polymerization, there is still the need for further improvement, in particular with regard to controlling the molecular weight distribution of the polymer.

There is accordingly a need to provide an apparatus for the gas-phase polymerization that allows the production of tailored polymer structures that meet today's demanding processing and product requisites.

### SUMMARY OF THE INVENTION

The present disclosure provides an apparatus for carrying out a catalytic gas-phase olefin polymerization comprising
at least a first polymerization zone adapted and arranged for growing polymer particles to flow upward under fast fluidization or transport conditions and at least a second polymerization zone adapted and arranged for the growing polymer particles to flow downward; and a gas/solid
separation zone having a cylindrical shape; wherein the second polymerization zone has an upper part being connected to the separation zone, a lower part being connected to the upper part and a line for feeding a gas and/or liquid into the second polymerization zone; the first polymerization zone being connected to the separation zone by a connecting part; the lower part of the second polymerization zone being connected to the lower part of the first polymerization zone by a connecting part;
wherein the ratio of the diameter D01 of the separation zone (4) to the diameter D03 of the upper part (5) of the second polymerization zone (2) is 1.02 to 1.5, preferably 1.05 to 1.4, more preferably 1.08 to 1.3;
wherein the ratio of the height H01 of the separation zone to the diameter D01 of the separation zone is 2.5 to 4.5, preferably 2.8 to 4.2, more preferably 2.9 to 4; and
wherein the ratio of the diameter D03 of the upper part (5) of the second polymerization zone (2) to the diameter D04 of the lower part (6) of the second polymerization zone (2) is 1.2 to 2, preferably 1.3 to 1.8, more preferably 1.4 to 1.7.

In some embodiments, the height H05 of the upper part of the second polymerization zone (2) is 5000 to 10000 mm, preferably 6000 to 8000 mm, more preferably 6800 to 7200 mm.

In some embodiments, the ratio of the height H05 of the upper part of the second polymerization zone to the diameter D03 of the upper part of the second polymerization zone is 2 to 4, preferably 2 to 3.8, more preferably 2 to 3.6.

In some embodiments, the separation zone and the upper part of the second polymerization zone are connected by a first connecting part having a height H02, wherein the diameter of the connecting part constantly decreases from the diameter D01 of the separation zone to the diameter D03 of the upper part of the second polymerization zone.

In some embodiments, the upper part of the second polymerization zone and the lower part of the second polymerization zone are connected by way of a second connecting part having a height H06 wherein the diameter of the connecting part constantly decreases from the diameter D03 of the upper part of the second polymerization zone to the diameter D04 of the lower part of the second polymerization zone.

In some embodiments, the angle A01 of the first connecting part connecting the separation zone to the upper part of the second polymerization zone is 5 to 25°, preferably 8 to 20° and more preferably 10 to 15°.

In some embodiments, the angle A02 of the second connecting part connecting the upper part of the second polymerization zone to the lower part of the second polymerization zone is 5 to 25°, preferably 8 to 20° and more preferably 10 to 15°.

In some embodiments, the height H05' from the bottom tangent line of the upper part of the second polymerization zone to the entrance of the feeding line into the second polymerization zone is 2000 to 6000 mm, preferably 2500 to 5000 mm, more preferably 3000 to 4500 mm.

In some embodiments, the apparatus further comprises at least one of the following:
i) a recycle line connecting the separation zone to one or more points of reintroduction into the connecting part or into the first polymerization zone;
ii) a line for feeding a catalyst into the first polymerization zone;
iii) a line for feeding monomers into the apparatus;
iv) a discharge system for discharging polymer from the second polymerization zone.

The present disclosure further provides a process for carrying out a catalytic gas-phase olefin polymerization in the apparatus of any of claims 1 to 11, comprising feeding one or more olefins into the apparatus, contacting the olefins and a catalyst under reaction conditions in the at least first polymerization zone and the at least second polymerization zone and collecting the polymer product from the at least second polymerization zone, wherein the growing polymer particles flow upward through the first polymerization zone under fast fluidization or transport conditions, leave the first polymerization zone, pass through the gas/solid separation zone and enter the second polymerization zone where the polymer particles flow downward under the action of gravity, leave the second polymerization zone and are at least partially reintroduced into the first polymerization zone, thus establishing a circulation of polymer between the first polymerization zone and the second polymerization zone, wherein the second polymerization zone comprises a bed of densified polymer particles.

In some embodiments, the gas mixture present in the first polymerization zone is completely or partially prevented from flowing down the upper part of the second polymerization zone by introducing a gas or liquid into the second polymerization zone via feeding line; and wherein the gas mixture present in the second polymerization zone differs from the gas mixture present in the first polymerization zone.

In some embodiments, the surface of the bed of densified polymer particles is located in the upper part of the second polymerization zone.

In some embodiments, the gas mixture present in the first polymerization zone is prevented from entering the second polymerization zone by introducing the gas or liquid into the upper part of the second polymerization zone over or below the surface of the bed of densified polymer particles.

In some embodiments, the polymerization is a homopolymerization of ethylene or a copolymerization of ethylene and one or more other olefins selected from the group consisting of 1-butene, 1-hexene and 1-octene or the polymerization is a homopolymerization of propylene or a copolymerization of propylene and one or more other olefins selected from the group consisting of ethylene, 1-butene and 1-hexene.

### BRIEF DESCRIPTION OF THE DRAWINGS

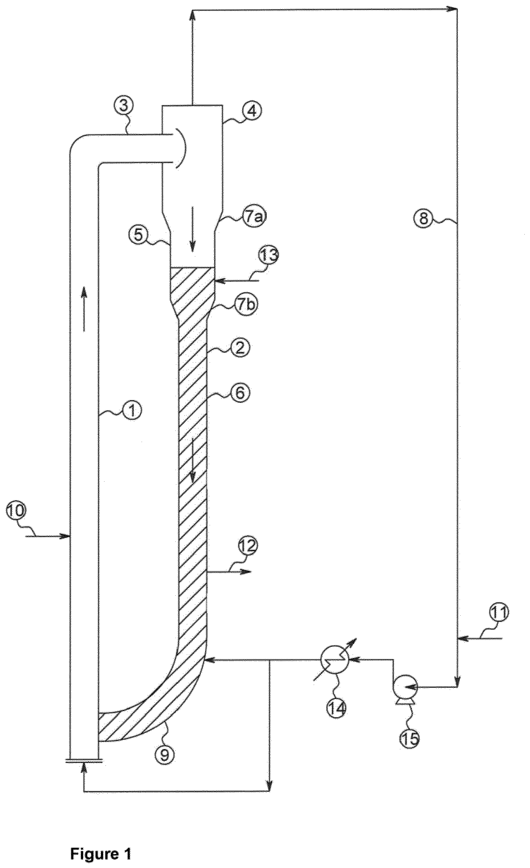

Figure 1 is a diagrammatic representation of one embodiment of the apparatus according to the present disclosure.

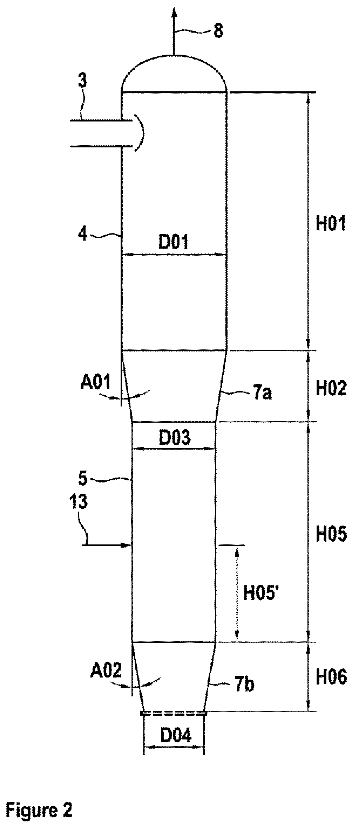

Figure 2 is an enlarged excerpt of the top part of the second polymerization zone (2) showing in detail:
   - a separation zone (4) having a height H01 and a diameter D01;
   - an upper part (5) of the second polymerization zone (2) having a height H05 and diameter D03;
   - a first connecting part (7a) having a height H02 and an associated angle A01; and
   - a second connecting part (7b) having a height H06 and an associated angle A02.

### DETAILED DESCRIPTION OF THE INVENTION

Within the course of the present disclosure, the inventors have found that by adapting the design of apparatuses for carrying out catalytic gas-phase olefin polymerizations comprising a first polymerization zone in which growing polymer particles flow upward under fast fluidization or transport conditions and comprising a second polymerization zone in which the growing polymer particles flow downward, i.e. by adapting the design of so-called multizone circulation reactors (MZCR), and paying special attention to the geometric ratios among the different parts of the apparatuses, the production efficacy of the polymerization, and in particular the control of the molecular weight distribution and the comonomer distribution of the obtained polyolefins can be even further improved.

The present disclosure accordingly provides an apparatus for carrying out a catalytic gas-phase olefin polymerization comprising at least a first polymerization zone (1) having a cylindrical shape adapted and arranged for growing polymer particles to flow upward under fast fluidization or transport conditions and at least a second polymerization zone (2) adapted and arranged for the growing polymer particles to flow downward; and a gas/solid separation zone (4); wherein the second polymerization zone (2) has an upper part (5) being connected to the separation zone (4), a lower part (6) being connected to the upper part (5) and a line (13) for feeding a gas and/or liquid into the second polymerization zone (2); the first polymerization zone (1) being connected to the separation zone (4) by a connecting part (3); the lower part (6) of the second polymerization zone (2) being connected to the lower part of the first polymerization zone (1) by a connecting part (9); wherein the ratio of the height H01 of the separation zone (4) to the diameter D01 of the separation zone (4) is 2.5 to 4.5, preferably 2.8 to 4.2, more preferably 2.9 to 4.

Olefins which may be polymerized in the apparatuses of the present disclosure are especially 1-olefins, i.e. hydrocarbons having terminal double bonds, without being restricted thereto. Preference is given to nonpolar olefinic compounds. Particularly preferred 1-olefins are linear or branched C₂-C₁₂-1-alkenes, in particular linear C₂-C₁₀-1-alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene or 1,7-octadiene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

The apparatuses of the present disclosure can be used for the homopolymerization or copolymerization of ethylene or propylene and the apparatuses are in particular suitable for the homopolymerization or copolymerization of ethylene. Preferred comonomers in propylene polymerization are up to 40 wt.% of ethylene, 1-butene and/or 1-hexene, preferably from 0.5 wt.% to 35 wt.% of ethylene, 1-butene and/or 1-hexene. As comonomers in ethylene polymerization, preference is given to using up to 20 wt.%, more preferably from 0.01 wt.% to 15 wt.% and especially from 0.05 wt.% to 12 wt.% of C₃-C₈-1-alkenes, in particular 1-butene, 1-pentene, 1-hexene and/or 1-octene. Particular preference is given to polymerizations in which ethylene is copolymerized with from 0.1 wt.% to 12 wt.% of 1-hexene and/or 1-butene.

Keeping the ratio between the height H01 of the separation zone (4) and the diameter D01 of the separation zone (4) within the claimed ranges allows for an effective separation of the gas/solid mixture introduced into the separation zone (4) from the first polymerization zone (1). Further, it was found that by ensuring a sufficient height and diameter of the separation zone (4), as expressed by the ratio H01/D01, polymer carry-over in the gas leaving the separation zone (4) could be avoided or sensibly reduced, even in cases where the level of the polymer in the second polymerization (2) zone was particularly high.

The concept of the multizone circulating reactor relies on providing multiple reaction zones having different reaction conditions. Since polymerization is carried out in a circular process, separation of the gas mixtures which are present in the first polymerization zone (1) and the second polymerization zone (2) is of utmost importance to ensure an effective process and broad molecular weight distribution. In the course of the present disclosure, it was found that both the needs of limiting the carry-over of polymer in the gas leaving the separation zone (4) and the separation of the gas of polymerization zone (1) from the gas of polymerization zone (2) could be combined by adapting the diameter D01 of the separation zone (4) and the diameter D03 of the upper part (5) of the second polymerization zone (2). The ratio D01/D03 of the diameter D01 of the separation zone (4) and the diameter D03 of the upper part (5) of the second polymerization zone (2) is therefore 1.02 to 1.5, preferably 1.05 to 1.4, especially preferred 1.08 to 1.3. Keeping the ratio of the diameter D01 of the separation zone (4) and the diameter D03 of the upper part (5) of the second polymerization zone (2) within the claimed limits allows as well to have an efficient gas/solid separation in the separation zone (4) as to ensure a separation of the gas mixture present in the first polymerization zone (1) from the gas within the second polymerization zone (2).

Independently from the polymerization capacity of the apparatuses, the height H05 of the upper part (5) of the second polymerization zone (2) is preferably 5000 to 10000 mm, more preferably 6000 to 8000 mm, and in particular 6800 to 7200 mm. It was found that a height of the upper part (5) of the second polymerization zone (2) within the claimed ranges ensures enough powder residence time for a proper gas separation and enough room for level control and variation at the same time without affecting the efficiency of the gas/solid separation zone (4).

It was further found that the risk of an overflow of the upper part (5) of the second polymerization zone (2), which would negatively affect the separation efficacy of the separation zone (4), could be minimized by not only ensuring a sufficient height of the upper part (5) of the second polymerization zone (2) but also by ensuring a large enough diameter D03 of the upper part (5) of the second polymerization zone (2). In a preferred embodiment, the ratio H05/D03 of the height H05 of the upper part (5) of the second polymerization zone (2) and the diameter D03 of said upper part (5) is 2 to 4, preferably 2 to 3.8, more preferably 2 to 3.6.

One of the characteristics of the MZCR technology is the possibility for an effective separation of the gas mixtures present in the different polymerization zones. Therefore, a lot of effort has been put into increasing the efficacy of said separation. It was now found that the separation of the gas mixture present in the first polymerization zone (1) and the gas mixture present in the second polymerization zone (2) could be even further increased by adapting the design of the second polymerization zone (2). The ratio D03/D04 of the diameter D03 of the upper part (5) of the second polymerization zone (2) and the diameter D04 of the lower part (6) of the second polymerization zone (2) is 1.2 to 2, preferably 1.3 to 1.8, more preferably 1.4 to 1.7. This way, a much lower velocity of the solid in the upper part (5) of the second polymerization zone (2), where the barrier gas and/or liquid is introduced, can be maintained than in the lower part (6) of the second polymerization zone (2), avoiding fluidization which would prevent the barrier from being effective.

In preferred embodiments of the present disclosure, the separation zone (4) has a cylindrical shape, i.e. the diameter D01 of the separation zone (4) is constant over the entire height H01 of the separation zone (4) and/or the upper part (5) of the second polymerization zone (2) has a cylindrical shape, i.e. the diameter D03 of the upper part (5) of the second polymerization zone (2) is constant over the entire height H05 of the upper part (5) of the second polymerization zone (2). A constant diameter within the meaning of the present disclosure is to be understood in that the respective diameter deviates from any given value by less than 5%, preferably by less than 2%, more preferably by less than 0.5% and specifically by less than 0.1%.

As described above, the efficacy of the separation of the gas mixtures of the different polymerization zones could be further increased by adapting the design of the second polymerization zone (2). In a preferred embodiment, the separation zone (4) and the upper part (5) of the second polymerization zone (2) are therefore connected by a first connecting part (7a) having a height H02 wherein the diameter of the connecting part (7a) constantly decreases from the diameter D01 of the separation zone (4) to the diameter D03 of the upper part (5) of the second polymerization zone (2), preferably over the total height H02 of the connecting part (7a). The upper part (5) of the second polymerization zone (2) and the lower part (6) of the second polymerization zone are preferably connected by way of a second connecting part (7b) having a height H06 wherein the diameter of the connecting part (7b) constantly decreases from the diameter D03 of the upper part (5) of the second polymerization zone (2) to the diameter D04 of the lower part (6) of the second polymerization zone (2), preferably over the total height H06 of the second connecting part (7b).

Due to the decrease in diameter, the first connecting part (7a) and the second connecting part (7b) of the second polymerization zone (2) each have a conical and/or tronco-conical shape. The angle A01 of the first (tronco-)conically shaped connecting part (7a) is preferably 5 to 25°, more preferably 8 to 20° and in particular 10 to 15°. The angle A02 of the second (tronco-)conically shaped connecting part (7b) is preferably 5 to 25°, more preferably 8 to 20° and in particular 10 to 15°. It was found that a smooth downward flow of the polymer through the second polymerization zone (2) could be ensured when the angles A01 and A02 were kept within the set limits and stagnation of the polymer powder, usually resulting in chunk formation, could be significantly reduced.

Within the MZCR technology, the separation of the multiple reaction zones is achieved by introducing a barrier gas or liquid which prevents the gas mixture of one reaction zone from entering another reaction zone. Within the course of the present disclosure, it was found that the efficacy of the separation could be improved by ensuring a certain distance between the entrance of the feed line for introducing the barrier gas and/or liquid into the second polymerization zone (2) and the bottom tangent line of the upper part (5) of the second polymerization zone (2). Therefore, in a preferred embodiment, the distance H05' from the bottom tangent line of the upper part (5) of the second polymerization zone (2) of the apparatus of the present disclosure to the entrance of the feeding line (13) for feeding a gas and/or liquid into the second polymerization zone (2) is 2000 to 6000 mm, preferably 2500 to 5000 mm, more preferably 3000 to 4500 mm.

In order to ensure smooth and efficient polymerization, the apparatus of the present disclosure preferably further comprises at least one of the following:
i) a recycle line (8) connecting the separation zone (4) to one or more points of reintroduction into the connecting part (9) and/or into the first polymerization zone (1), preferably equipped with a heat exchanger (14) and a compressor (15);
ii) a line (10) for feeding a catalyst into the first polymerization zone (1);
iii) a line (11) for feeding monomers into the apparatus;
iv) a discharge system (12) for discharging polymer from the second polymerization zone (2).

The person skilled in the art is aware that the at least first polymerization zone (1) and the at least second polymerization zone (2) of the apparatus of the present disclosure may be connected in different ways and that more than two polymerization zones may be employed without deviating from the spirit of the present disclosure. Suitable structures and combinations are, for example, described in WO 00/02929 and WO 97/04015.

The present disclosure further provides a process for carrying out a catalytic gas-phase olefin polymerization in the apparatus of the present disclosure. The process comprises the steps of feeding one or more olefins into the apparatus, contacting the olefins and a catalyst under reaction conditions in the at least first polymerization zone (1) and the at least second polymerization zone (2) and collecting the polymer product from the at least second polymerization zone (2), wherein the growing polymer particles flow upward through the first polymerization zone (1) under fast fluidization or transport conditions, leave the first polymerization zone (1), pass through the gas/solid separation zone (4) and enter the second polymerization zone (2) where the polymer particles flow downward under the action of gravity, leave the second polymerization zone (2) and are at least partially reintroduced into the first polymerization zone (1), thus establishing a circulation of polymer between the first polymerization zone (1) and the second polymerization zone (2), wherein the second polymerization zone (2) comprises a bed of densified polymer particles.

In preferred embodiments of the present disclosure, the surface of the bed of densified polymer particles is located in the upper part (5) of the second polymerization zone (2).

In order to broaden the molecular weight distribution of the obtained polyolefins or to obtain copolymers having different comonomer distributions, different polymerization zones are established by preventing the gas mixture present in the first polymerization zone (1) from entering the second polymerization zone (2). Therefore, in a preferred embodiment, the gas mixture present in the first polymerization zone (1) is completely or partially prevented from flowing down the upper part (5) of the second polymerization zone (2) by introducing a barrier gas and/or liquid into the second polymerization zone (2) via a feeding line (13); and wherein the gas mixture present in the second polymerization zone (2) differs from the gas mixture present in the first polymerization zone (1).

In an especially preferred embodiment, the gas mixture present in the first polymerization zone (1) is prevented from entering the second polymerization zone (2) by introducing a gas or a liquid into the upper part (5) of the second polymerization zone (2) over or below the surface of the bed of densified polymer particles.

### List of reference signs:

- 1: first polymerization zone
- 2: second polymerization zone
- 3: connecting part
- 4: separation zone
- 5: upper part of the second polymerization zone
- 6: lower part of the second polymerization zone
- 7a: first connecting part connecting the separation zone and the upper part of the second polymerization zone
- 7b: second connecting part connecting the upper part and the lower part of the second polymerization zone
- a: recycle line
- 9: connecting part
- 10: catalyst feeding line
- 11: monomer feeding line
- 12: polymer discharge system
- 13: barrier gas/liquid feeding line
- 14: heat exchanger
- 15: compressor

## Claims

1. An apparatus for carrying out a catalytic gas-phase olefin polymerization comprising
at least a first polymerization zone (1) adapted and arranged for growing polymer particles to flow upward under fast fluidization or transport conditions and at least a second polymerization zone (2) adapted and arranged for the growing polymer particles to flow downward; and a gas/solid separation zone (4) having a cylindrical shape; wherein the second polymerization zone (2) has an upper part (5) being connected to the separation zone (4), a lower part (6) being connected to the upper part (5) and a line (13) for feeding a gas and/or liquid into the second polymerization zone (2); the first polymerization zone (1) being connected to the separation zone (4) by a connecting part (3); the lower part (6) of the second polymerization zone (2) being connected to the lower part of the first polymerization zone (1) by a connecting part (9);
wherein the ratio of the diameter D01 of the separation zone (4) to the diameter D03 of the upper part (5) of the second polymerization zone (2) is 1.02 to 1.5, preferably 1.05 to 1.4, more preferably 1.08 to 1.3;
wherein the ratio of the height H01 of the separation zone (4) to the diameter D01 of the separation zone (4) is 2.5 to 4.5, preferably 2.8 to 4.2, more preferably 2.9 to 4; and
wherein the ratio of the diameter D03 of the upper part (5) of the second polymerization zone (2) to the diameter D04 of the lower part (6) of the second polymerization zone (2) is 12 to 2, preferably 1.3 to 1.8, more preferably 1.4 to 1.7.

2. The apparatus of claim 1 or 2, wherein the height H05 of the upper part (5) of the second polymerization zone (2) is 5000 to 10000 mm, preferably 6000 to 8000 mm, more preferably 6800 to 7200 mm.

3. The apparatus of claim 1 or 2, wherein the ratio of the height H05 of the upper part (5) of the second polymerization zone (2) to the diameter D03 of the upper part (5) of the second polymerization zone (2) is 2 to 4, preferably 2 to 3.8, more preferably 2 to 3.6.

4. The apparatus of any of the forgoing claims, wherein the separation zone (4) and the upper part (5) of the second polymerization zone (2) are connected by a first connecting part (7a) having a height H02, wherein the diameter of the connecting part (7a) constantly decreases from the diameter D01 of the separation zone (4) to the diameter D03 of the upper part (5) of the second polymerization zone (2).

5. The apparatus of any of the forgoing claims, wherein the upper part (5) of the second polymerization zone (2) and the lower part (6) of the second polymerization zone are connected by way of a second connecting part (7b) having a height H06 wherein the diameter of the connecting part (7b) constantly decreases from the diameter D03 of the upper part (5) of the second polymerization zone (2) to the diameter D04 of the lower part (6) of the second polymerization zone (2).

6. The apparatus of any of the forgoing claims, wherein the angle A01 of the first connecting part (7a) connecting the separation zone (4) to the upper part (5) of the second polymerization zone (2) is 5 to 25°, preferably 8 to 20° and more preferably 10 to 15°.

7. The apparatus of any of the forgoing claims, wherein the angle A02 of the second connecting part (7b) connecting the upper part (5) of the second polymerization zone (2) to the lower part (6) of the second polymerization zone (2) is 5 to 25°, preferably 8 to 20° and more preferably 10 to 15°.

8. The apparatus of any of the forgoing claims, wherein the height H05' from the bottom tangent line of the upper part (5) of the second polymerization zone (2) to the entrance of the feeding line (13) into the second polymerization zone (2) is 2000 to 6000 mm, preferably 2500 to 5000 mm, more preferably 3000 to 4500 mm.

9. The apparatus of any of the forgoing claims, wherein the apparatus further comprises at least one of the following:
i) a recycle line (8) connecting the separation zone (4) to one or more points of reintroduction into the connecting part (9) or into the first polymerization zone (1);
ii) a line (10) for feeding a catalyst into the first polymerization zone (1);
iii) a line (11) for feeding monomers into the apparatus;
iv) a discharge system (12) for discharging polymer from the second polymerization zone (2).

10. A process for carrying out a catalytic gas-phase olefin polymerization in the apparatus of any of claims 1 to 9, comprising feeding one or more olefins into the apparatus, contacting the olefins and a catalyst under reaction conditions in the at least first polymerization zone (1) and the at least second polymerization zone (2) and collecting the polymer product from the at least second polymerization zone (2), wherein the growing polymer particles flow upward through the first polymerization zone (1) under fast fluidization or transport conditions, leave the first polymerization zone (1), pass through the gas/solid separation zone (4) and enter the second polymerization zone (2) where the polymer particles flow downward under the action of gravity, leave the second polymerization zone (2) and are at least partially reintroduced into the first polymerization zone (1), thus establishing a circulation of polymer between the first polymerization zone (1) and the second polymerization zone (2), wherein the second polymerization zone (2) comprises a bed of densified polymer particles.

11. The process of claim 10, wherein the gas mixture present in the first polymerization zone (1) is completely or partially prevented from flowing down the upper part (5) of the second polymerization zone (2) by introducing a gas or liquid into the second polymerization zone (2) via feeding line (13); and wherein the gas mixture present in the second polymerization zone (2) differs from the gas mixture present in the first polymerization zone (1).

12. The process of claim 11, wherein the surface of the bed of densified polymer particles is located in the upper part (5) of the second polymerization zone (2).

13. The process of claim 11 or 12, wherein the gas mixture present in the first polymerization zone (1) is prevented from entering the second polymerization zone (2) by introducing the gas or liquid into the upper part (5) of the second polymerization zone (2) over or below the surface of the bed of densified polymer particles.

14. The process of any of claims 10 to 13, wherein the polymerization is a homopolymerization of ethylene or a copolymerization of ethylene and one or more other olefins selected from the group consisting of 1-butene, 1-hexene and 1-octene or the polymerization is a homopolymerization of propylene or a copolymerization of propylene and one or more other olefins selected from the group consisting of ethylene, 1-butene and 1-hexene.

## Patentansprüche

1. Vorrichtung zum Durchführen einer katalytischen Gasphasen-Olefinpolymerisierung, umfassend
mindestens eine erste Polymerisierungszone (1), die eingerichtet und angeordnet ist, so dass wachsende Polymerpartikel unter raschen Verwirbelungs- oder Transportbedingungen aufwärts fließen, und mindestens eine zweite Polymerisierungszone (2), die eingerichtet und angeordnet ist, so dass die wachsenden Polymerpartikel abwärts fließen, und eine Gas/Feststoff-Trennzone (4) mit einer zylindrischen Form; wobei die zweite Polymerisierungszone (2) ein Oberteil (5), das mit der Trennzone (4) verbunden ist, ein Unterteil (6), das mit dem Oberteil (5) verbunden ist, und eine Leitung (13) zum Einspeisen eines Gases und/oder einer Flüssigkeit in die zweite Polymerisierungszone (2) aufweist; wobei die erste Polymerisierungszone (1) über ein Verbindungsteil (3) mit der Trennzone (4) verbunden ist, das Unterteil (6) der zweiten Polymerisierungszone (2) über ein Verbindungsteil (9) mit dem Unterteil der ersten Polymerisierungszone (1) verbunden ist,
wobei das Verhältnis des Durchmessers D01 der Trennzone (4) zu dem Durchmesser D03 des Oberteils (5) der zweiten Polymerisierungszone (2) 1,02 bis 1,5, vorzugsweise 1,05 bis 1,4, bevorzugter 1,08 bis 1,3 beträgt;
wobei das Verhältnis der Höhe H01 der Trennzone (4) zu dem Durchmesser D01 der Trennzone (4) 2,5 bis 4,5, vorzugsweise 2,8 bis 4,2, bevorzugter 2,9 bis 4 beträgt; und
wobei das Verhältnis des Durchmessers D03 des Oberteils (5) der zweiten Polymerisierungszone (2) zu dem Durchmesser D04 des Unterteils (6) der zweiten Polymerisierungszone (2) 1,2 bis 2, vorzugsweise 1,3 bis 1,8, bevorzugter 1,4 bis 1,7 beträgt.

2. Vorrichtung nach Anspruch 1 oder 2, wobei die Höhe H05 des Oberteils (5) der zweiten Polymerisierungszone (2) 5000 bis 10000 mm, vorzugsweise 6000 bis 8000 mm, bevorzugter 6800 bis 7200 mm beträgt.

3. Vorrichtung nach Anspruch 1 oder 2, wobei das Verhältnis der Höhe H05 des Oberteils (5) der zweiten Polymerisierungszone (2) zu dem Durchmesser D03 des Oberteils (5) der zweiten Polymerisierungszone (2) 2 bis 4, vorzugsweise 2 bis 3,8, bevorzugter 2 bis 3,6 beträgt.

4. Vorrichtung nach einem der vorhergehenden Ansprüche, wobei die Trennzone (4) und das Oberteil (5) der zweiten Polymerisierungszone (2) über ein erstes Verbindungsteil (7a) mit einer Höhe H02 verbunden sind, wobei der Durchmesser des Verbindungsteils (7a) von dem Durchmesser D01 der Trennzone (4) zu dem Durchmesser D03 des Oberteils (5) der zweiten Polymerisierungszone (2) konstant abnimmt.

5. Vorrichtung nach einem der vorhergehenden Ansprüche, wobei das Oberteil (5) der zweiten Polymerisierungszone (2) und das Unterteil (6) der zweiten Polymerisierungszone mittels eines zweiten Verbindungsteils (7b) mit einer Höhe H06 verbunden sind, wobei der Durchmesser des Verbindungsteils (7b) von dem Durchmesser D03 des Oberteils (5) der zweiten Polymerisierungszone (2) zu dem Durchmesser D04 des Unterteils (6) der zweiten Polymerisierungszone (2) konstant abnimmt.

6. Vorrichtung nach einem der vorhergehenden Ansprüche, wobei der Winkel A01 des ersten Verbindungsteils (7a), welches die Trennzone (4) mit dem Oberteil (5) der zweiten Polymerisierungszone (2) verbindet, 5 bis 25°, vorzugsweise 8 bis 20° und bevorzugter 10 bis 15° beträgt.

7. Vorrichtung nach einem der vorhergehenden Ansprüche, wobei der Winkel A02 des zweiten Verbindungsteils (7b), welches das Oberteil (5) der zweiten Polymerisierungszone (2) mit dem Unterteil (6) der zweiten Polymerisierungszone (2) verbindet, 5 bis 25°, vorzugsweise 8 bis 20° und bevorzugter 10 bis 15° beträgt.

8. Vorrichtung nach einem der vorhergehenden Ansprüche, wobei die Höhe H05' von der unteren Tangentenlinie des Oberteils (5) der zweiten Polymerisierungszone (2) zu dem Eingang der Speiseleitung (13) in die zweite Polymerisierungszone (2) 2000 bis 6000 mm, vorzugsweise 2500 bis 5000 mm, bevorzugter 3000 bis 4500 mm beträgt.

9. Vorrichtung nach einem der vorhergehenden Ansprüche, wobei die Vorrichtung des Weiteren mindestens eines der folgenden umfasst:
i) eine Recyclingleitung (8), welche die Trennzone (4) mit einem oder mehreren Punkten zur erneuten Einbringung in das Verbindungsteil (9) oder in die erste Polymerisierungszone (1) verbindet;
ii) eine Leitung (10) zum Einspeisen eines Katalysators in die erste Polymerisierungszone (1);
iii) eine Leitung (11) zum Einspeisen von Monomeren in die Vorrichtung,
iv) ein Austragungssystem (12) zum Austragen von Polymer aus der zweiten Polymerisierungszone (2).

10. Verfahren zur Durchführung einer katalytischen Gasphasen-Olefinpolymerisierung in der Vorrichtung gemäß einem der Ansprüche 1 bis 9, umfassend Einspeisen von einem oder mehreren Olefinen in die Vorrichtung, Kontaktieren der Olefine und eines Katalysators unter Reaktionsbedingungen in der mindestens ersten Polymerisierungszone (1) und der mindestens zweiten Polymerisierungszone (2) und Auffangen des Polymerprodukts aus der mindestens zweiten Polymerisierungszone (2), wobei die wachsenden Polymerpartikel unter raschen Verwirbelungs- oder Transportbedingungen aufwärts durch die erste Polymerisierungszone (1) fließen, die erste Polymerisierungszone (1) verlassen, die Gas/Feststoff-Trennzone (4) passieren und in die zweite Polymerisierungszone (2) eintreten, wo die Polymerpartikel unter Wirkung der Schwerkraft abwärts fließen, die zweite Polymerisierungszone (2) verlassen und mindestens teilweise erneut in die erste Polymerisierungszone (1) eingebracht werden, wodurch eine Polymerzirkulation zwischen der ersten Polymerisierungszone (1) und der zweiten Polymerisierungszone (2) errichtet wird, wobei die zweite Polymerisierungszone (2) ein Bett aus verdichteten Polymerpartikeln umfasst.

11. Verfahren nach Anspruch 10, wobei die in der ersten Polymerisierungszone (1) vorhandene Gasmischung vollständig oder teilweise am Herabfließen in dem Oberteil (5) der zweiten Polymerisierungszone (2) gehindert wird, indem über Speiseleitung (13) ein Gas oder eine Flüssigkeit in die zweite Polymerisierungszone (2) eingebracht wird, und wobei die in der zweiten Polymerisierungszone (2) vorhandene Gasmischung sich von der in der ersten Polymerisierungszone (1) vorhandenen Gasmischung unterscheidet.

12. Verfahren nach Anspruch 11, wobei die Oberfläche des Bettes der verdichteten Polymerpartikel sich in dem Oberteil (5) der zweiten Polymerisierungszone (2) befindet.

13. Verfahren nach Anspruch 11 oder 12, wobei die in der ersten Polymerisierungszone (1) vorhandene Gasmischung am Eintreten in die zweite Polymerisierungszone (2) gehindert wird, indem das Gas oder die Flüssigkeit über oder unter der Oberfläche des Bettes der verdichteten Polymerpartikel in das Oberteil (5) der zweiten Polymerisierungszone (2) eingebracht wird.

14. Verfahren nach einem der Ansprüche 10 bis 13, wobei die Polymerisierung eine Homopolymerisierung von Ethylen oder eine Copolymerisierung von Ethylen und einem oder mehreren anderen Olefinen ausgewählt aus der Gruppe bestehend aus 1-Buten, 1-Hexen und 1-Octen ist, oder die Polymerisierung eine Homopolymerisierung von Propylen oder eine Copolymerisierung von Propylen und einem oder mehreren anderen Olefinen ausgewählt aus der Gruppe bestehend aus Ethylen, 1-Buten und 1-Hexen ist.

## Revendications

1. Appareil destiné à mettre en oeuvre une polymérisation catalytique en phase gazeuse d'oléfines, comprenant
au moins une première zone de polymérisation (1) conçue et agencée pour faire s'écouler des particules polymères en croissance vers le haut dans des conditions de fluidisation ou de transport rapides et au moins une seconde zone de polymérisation (2) conçue et agencée pour faire s'écouler les particules polymères en croissance vers le bas ; et une zone de séparation gaz/solide (4) présentant une forme cylindrique ; la seconde zone de polymérisation (2) présentant une partie supérieure (5) reliée à la zone de séparation (4), une partie inférieure (6) reliée à la partie supérieure (5) et une conduite (13) destinée à introduire un gaz et/ou un liquide dans la seconde zone de polymérisation (2) ; la première zone de polymérisation (1) étant reliée à la zone de séparation (4) par une partie de liaison (3) ; la partie inférieure (6) de la seconde zone de polymérisation (2) étant reliée à la partie inférieure de la première zone de polymérisation (1) par une partie de liaison (9) ;
le rapport du diamètre D01 de la zone de séparation (4) au diamètre D03 de la partie supérieure (5) de la seconde zone de polymérisation (2) étant de 1,02 à 1,5, de préférence de 1,05 à 1,4, plus préférablement de 1,08 à 1,3 ;
le rapport de la hauteur H01 de la zone de séparation (4) au diamètre D01 de la zone de séparation (4) étant de 2,5 à 4,5, de préférence de 2,8 à 4,2, plus préférablement de 2,9 à 4 ; et
le rapport du diamètre D03 de la partie supérieure (5) de la seconde zone de polymérisation (2) au diamètre D04 de la partie inférieure (6) de la seconde zone de polymérisation (2) étant de 1,2 à 2, de préférence de 1,3 à 1,8, plus préférablement de 1,4 à 1,7.

2. Appareil selon la revendication 1 ou 2, la hauteur H05 de la partie supérieure (5) de la seconde zone de polymérisation (2) étant de 5000 à 10.000 mm, de préférence de 6000 à 8000 mm, plus préférablement de 6800 à 7200 mm.

3. Appareil selon la revendication 1 ou 2, le rapport de la hauteur H05 de la partie supérieure (5) de la seconde zone de polymérisation (2) au diamètre D03 de la partie supérieure (5) de la seconde zone de polymérisation (2) étant de 2 à 4, de préférence de 2 à 3,8, plus préférablement de 2 à 3,6.

4. Appareil selon l'une quelconque des revendications précédentes, la zone de séparation (4) et la partie supérieure (5) de la seconde zone de polymérisation (2) étant reliées par une première partie de liaison (7a) présentant une hauteur H02, le diamètre de la partie de liaison (7a) diminuant constamment à partir du diamètre D01 de la zone de séparation (4) vers le diamètre D03 de la partie supérieure (5) de la seconde zone de polymérisation (2).

5. Appareil selon l'une quelconque des revendications précédentes, la partie supérieure (5) de la seconde zone de polymérisation (2) et la partie inférieure 6) de la seconde zone de polymérisation étant reliées par l'intermédiaire d'une seconde partie de liaison (7b) présentant une hauteur H06, le diamètre de la partie de liaison (7b) diminuant constamment à partir du diamètre D03 de la partie supérieure (5) de la seconde zone de polymérisation (2) vers le diamètre D04 de la partie inférieure (6) de la seconde zone de polymérisation (2).

6. Appareil selon l'une quelconque des revendications précédentes, l'angle A01 de la première partie de liaison (7a) reliant la zone de séparation (4) à la partie supérieure (5) de la seconde zone de polymérisation (2) étant de 5 à 25°, de préférence de 8 à 20° et plus préférablement de 10 à 15°.

7. Appareil selon l'une quelconque des revendications précédentes, l'angle A02 de la seconde partie de liaison (7b) reliant la partie supérieure (5) de la seconde zone de polymérisation (2) à la partie inférieure (6) de la seconde zone de polymérisation (2) étant de 5 à 25°, de préférence de 8 à 20° et plus préférablement de 10 à 15°.

8. Appareil selon l'une quelconque des revendications précédentes, la hauteur H05' à partir de la ligne tangente inférieure de la partie supérieure (5) de la seconde zone de polymérisation (2) jusqu'à l'entrée de la conduite d'alimentation (13) dans la seconde zone de polymérisation (2) étant de 2000 à 6000 mm, de préférence de 2500 à 5000 mm, plus préférablement de 3000 à 4500 mm.

9. Appareil selon l'une quelconque des revendications précédentes, l'appareil comprenant en outre au moins l'un des éléments suivants :
i) une conduite de recyclage (8) reliant la zone de séparation (4) à une ou plusieurs points de réintroduction dans la partie de liaison (9) ou dans la première zone de polymérisation (1) ;
ii) une conduite (10) destinée à introduire un catalyseur dans la première zone de polymérisation (1) ;
iii) une conduite (11) destinée à introduire des monomères dans l'appareil ;
iv) un système d'évacuation (12) destiné à évacuer le polymère à partir de la seconde zone de polymérisation (2).

10. Procédé destiné à mettre en oeuvre une polymérisation catalytique en phase gazeuse d'oléfines dans l'appareil selon l'une quelconque des revendications 1 à 9, comprenant l'introduction d'une ou de plusieurs oléfines dans l'appareil, la mise en contact des oléfines et d'un catalyseur dans des conditions de réaction dans ladite au moins une première zone de polymérisation (1) et ladite au moins une seconde zone de polymérisation (2) et la collecte du produit polymère à partir de ladite au moins une seconde zone de polymérisation (2), les particules polymères en croissance s'écoulant vers le haut à travers la première zone de polymérisation (1) dans des conditions de fluidisation ou de transport rapides,
quittant la première zone de polymérisation (1), traversant la zone de séparation gaz/solide (4) et entrant dans la seconde zone de polymérisation (2) où les particules polymères s'écoulent vers le bas sous l'action de la gravité, quittant la seconde zone de polymérisation (2) et étant au moins partiellement réintroduites dans la première zone de polymérisation (1), établissant ainsi une circulation de polymère entre la première zone de polymérisation (1) et la seconde zone de polymérisation (2), la seconde zone de polymérisation (2) comprenant un lit densifié de particules polymères.

11. Procédé selon la revendication 10, le mélange gazeux présent dans la première zone de polymérisation (1) étant complètement ou partiellement empêché de s'écouler vers le bas de la partie supérieure (5) de la seconde zone de polymérisation (2) par introduction d'un gaz ou d'un liquide dans la seconde zone de polymérisation (2) par l'intermédiaire d'une conduite d'alimentation (13) ; et le mélange gazeux présent dans la seconde zone de polymérisation (2) étant différent du mélange gazeux présent dans la première zone de polymérisation (1).

12. Procédé selon la revendication 11, la surface du lit densifié de particules polymères étant située dans la partie supérieure (5) de la seconde zone de polymérisation (2).

13. Procédé selon la revendication 11 ou 12, le mélange gazeux présent dans la première zone de polymérisation (1) étant empêché d'entrer dans la seconde zone de polymérisation (2) par introduction du gaz ou du liquide dans la partie supérieure (5) de la seconde zone de polymérisation (2) sur ou au-dessous de la surface du lit densifié de particules polymères.

14. Procédé selon l'une quelconque des revendications 10 à 13, la polymérisation étant une homopolymérisation d'éthylène ou d'une copolymérisation d'éthylène et d'une ou plusieurs autres oléfines choisies dans le groupe constitué par le 1-butène, le 1-hexène et le 1-octène ou la polymérisation étant une homopolymérisation de propylène ou une copolymérisation de propylène et d'une ou plusieurs autres oléfines choisies dans le groupe constitué par l'éthylène, le 1-butène et le 1-hexène.
